(19) Europäisches Patentamt
European Patent Office
Office européen des brevets

(11) Numéro de publication: **0 225 261**
**A1**

# (12) DEMANDE DE BREVET EUROPEEN

(21) Numéro de dépôt: **86420262.7**

(22) Date de dépôt: **23.10.86**

(51) Int. Cl.⁴: **C 08 L 27/06**
//(C08L27/06,83:06)

(30) Priorité: **30.10.85 FR 8516334**

(43) Date de publication de la demande:
**10.06.87 Bulletin 87/24**

(84) Etats contractants désignés:
**AT BE CH DE ES FR GB GR IT LI LU NL SE**

(71) Demandeur: **RHONE-POULENC SPECIALITES CHIMIQUES**
**"Les Miroirs" 18, Avenue d'Alsace**
**F-92400 Courbevoie (FR)**

(72) Inventeur: **Carette, Louis**
**64, rue de l'Egalité Résidence RODIN, apt. 1411**
**F-92130 Issy-Les-Moulineaux (FR)**

**Gay, Michel**
**11, rue Garibaldi**
**F-69006 Lyon (FR)**

(74) Mandataire: **Seugnet, Jean Louis et al**
**RHONE-POULENC INTERSERVICES Service Brevets**
**Chimie Centre de Recherches de Saint-Fons B.P. 62**
**F-69192 Saint-Fons Cédex (FR)**

## (54) Additif silicone pour polychlorure de vinyle.

(57) Composition de polychlorure de vinyle, caractérisée en ce qu'elle comporte, pour 100 parties de résine PVC, de 0,001 à 2 parties, de préférence de 0,005 à 1 partie d'au moins un polyorganosiloxane de formule moyenne (1) :

(1) 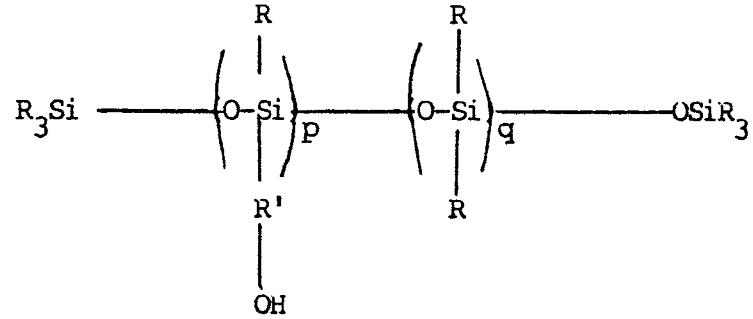

dans laquelle les radicaux R identiques ou différents sont choisis parmi les radicaux méthyle et phényle, 60 % molaire au moins des radicaux R étant des radicaux méthyle, le radical R' est un chaînon alkylène divalent hydrocarboné linéaire ou ramifié comportant de 1 à 18 atomes de carbone, p est un nombre entier compris entre 1 et 30, q entre 1 et 100.

Application au débullage du PVC plastisol et à la lubrication du PVC rigide et du PVC plastifié.

EP 0 225 261 A1

**Description**

ADDITIF SILICONE POUR POLYCHLORURE DE VINYLE

La présente invention concerne un nouvel additif silicone pour polychlorure de vinyle dénommé par la suite PVC.

Dans les applications industrielles du PVC, la plus grosse partie du marché total est couvert par des résines dont la mise en oeuvre se fait à partir de deux grandes catégories de compositions de PVC à l'état solide :
- la première catégorie rassemble les compositions ne contenant pas ou ne contenant que de faibles quantités de plastifiant, par exemple le dioctylphtalate (dénommé par la suite DOP) en vue de réaliser, le plus souvent par extrusion, des tubes, profilés, bouteilles, feuilles, disques, etc ..... à partir d'un PVC appelé couramment PVC rigide,
- la deuxième catégorie rassemble les compositions contenant des quantités notables de plastifiant pour réaliser notamment par calandrage, extrusion, moulage, injection moulage, des articles divers tels que feuilles et revêtement à partir d'un PVC appelé couramment PVC plastifié.

Le reste du marché est couvert par des résines dont la mise en oeuvre se fait à partir de plastisols qui sont, dans la plupart des cas, utilisés en enduction (revêtements de sols, tissus enduits vinyliques, etc .....). Un plastisol est un mélange pâteux de résine PVC et de plastifiant, généralement du DOP (dioctylphtalate).

L'homme de métier connait parfaitement les compositions particulières du PVC rigide, du PVC plastifié et des plastisols, il sait choisir les différentes résines PVC et additifs multiples en vue d'adapter les compositions aux produits qu'il veut fabriquer et aux procédés à utiliser pour fabriquer ces produits.

Pour le choix des compositions PVC ci-dessus et la conduite des procédés mettant en oeuvre ces compositions, l'homme de métier est toutefois confronté à une série de difficultés et, en particulier, un double problème majeur, le premier étant un problème de lubrification pour le PVC rigide et plastifié, le deuxième étant un problème de débullage du plastisol.

La lubrification d'une formulation PVC comporte différents aspects :
- il s'agit, à l'introduction du mélange froid dans une machine de transformation, de faciliter les glissements grain à grain ou granulé à granulé de PVC, pour éviter leur échauffement incontrôlé et en même temps faciliter leur interpénétration précedant leur mélangeage interne (fusion), pendant que la température s'élève progressivement,
- la progression du polymère le long des outils suppose un glissement continu, l'absence d'accrochage, collage, tâche, stagnation à l'origine de décompositions. Les lubrifiants, en s'interposant entre PVC et outil (métal), doivent aider au glissement et ce, jusqu'à la sortie du matériau hors de la machine.

Un seul agent lubrifiant ne peut jusqu'à présent assurer ces différents rôles, c'est pourquoi on utilise habituellement différents produits, qu'on classe de façon conventionnelle en :
- lubrifiants internes : ce sont des produits légèrement compatibles avec le PVC qui facilitent un "collage" léger entre grains et facilite le mélangeage,
- lubrifiants mixtes pouvant jouer en même temps le rôle précédent et le rôle lubrifiant externe, mais le rapport d'importance de ces deux effets évoluant le long de l'outillage étant par exemple plus interne au début du mélangeage et plus externe à la fin,
- lubrifiants externes ayant pour rôle essentiel d'éviter le collage en particulier sur les outils dans des zones de moindre vitesse de circulation de la matière fondue (sommet de torpille par exemple lors de la fabrication de bouteilles par extrusion soufflage).

Cette dernière classe de lubrifiant est la plus difficile à maîtriser car elle donne lieu à divers inconvénients dus à des phénomènes parasites par exemple :
- en extrusion, le lubrifiant externe, non compatible, peut s'accumuler sur les outils (dépôts), et provoquer un certain nombre de difficultés comme par exemple obturer les évents de moules, empêcher le soufflage et tâcher les produits lors de l'extrusion soufflage ou provoquer des irrégularités de débits entraînant des variations d'épaisseurs lors des extrusions de profilés.
- en calandrage le même phénomène peut donner lieu par exemple à des dépôts sur les cylindres "plate out" et par conséquent des tâches sur le film calandré ou bien un comportement irrégulier du bourrelet de PVC fondu sur la calandre et, par exemple, l'apparation de défauts sur les pellicules de PVC par exemple de chevrons.

De plus, les mélanges de lubrifiants connus peuvent réagir entre eux lors de l'échauffement du polymère pendant le procédé de transformation et donner des produits indésirables. Ainsi les cires de polyéthylène, de polypropylène oxydées peuvent réagir sur les sels ou les esters d'acides gras organiques ou minéraux et libérer l'acide correspondant pouvant donner lieu aux inconvénients ci-dessus. Il est par ailleurs bien connu que certains additifs détériorent l'aptitude à la soudabilité (en particulier la thermosoudabilité et la soudabilité haute fréquence) du PVC.

En ce qui concerne le débullage des plastisols on utilise des agents débullants non compatibles avec le PVC. Toutefois cette incompatibilité entraîne notamment une exsudation de l'agent débullant préjudiciable à l'aspect et aux propriétés du produit final.

On a déjà proposé des additifs silicone ou organosiliciés pour le PVC.

Ainsi dans le brevet US-A-4 268 548 on décrit l'utilisation dans les plastisols d'un composé contenant au moins un groupe azométhine et un groupe silane en tant que promoteur d'adhésion. Dans le brevet russe

SU-A-836 041 on décrit l'usage dans les plastisols de polyphényl-diméthyléthoxysiloxane pour améliorer la viscosité et la stabilité au stockage du plastisol. Dans le brevet US-A-4 301 103 on décrit l'utilisation comme agent délustrant du PVC par une résine polyester modifiée par une silicone.

Dans la demande de brevet japonais KOKAI 55/73 742, on décrit l'utilisation d'une huile silicone polydiméthylsiloxane comme lubrifiant du PVC plastifié pour l'injection moulage.

Dans la demande de brevet britannique GB-A-2 132 216 on décrit l'utilisation de bis(hydroxyalkyl)disiloxane dans un PVC conducteur en vue de faire des vidéo disquettes.

Dans ce qui suit, sauf mentions contraires, les pourcentages et parties sont en poids.

Un but de la présente invention est de proposer un additif silicone particulier pour PVC qui soit utilisable notamment à la fois comme lubrifiant du PVC rigide et du PVC plastifié et comme débullant du plastisol et qui ne présente pas les inconvénients des autres additifs silicones connus ou sous une forme très atténuée.

Un autre but de la présente invention est de proposer un lubrifiant pour PVC rigide et plastifié globalement non compatible avec le PVC, n'exsudant pas, mais qui présente un caractère suffisant de compatibilité avec le PVC pour assurer le recouvrement externe du polymère et pour rester suffisamment solidaire du PVC et non pas du métal de la machine, de manière à espacer le plus possible les arrêts de la machine en vue de son nettoyage rendu nécessaire par la présence de dépôts de PVC et de la décomposition thermique de ces dépôts.

Un autre but de la présente invention est de proposer un additif silicone pour PVC qui ne détériore pas la soudabilité du PVC.

Ces buts et d'autres sont atteints par la présente invention qui concerne en effet une composition de PVC, caractérisée en ce qu'elle comporte, pour 100 parties de résine PVC, de 0,001 à 2 parties, de préférence de 0,005 à 1 partie d'au moins un polyorganosiloxane de formule moyenne (1) :

(1) 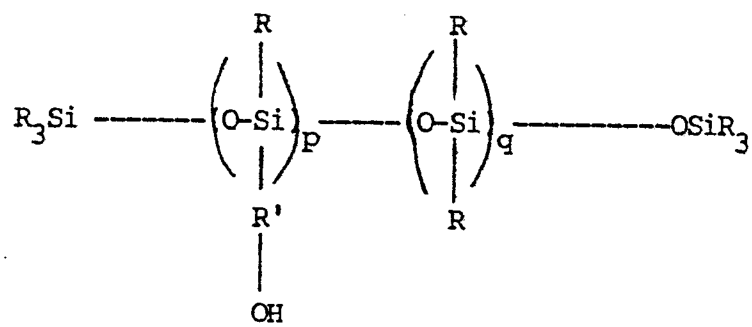

dans laquelle les radicaux R identiques ou différents sont choisis parmi les radicaux méthyle et phényle, 60 % molaire au moins des radicaux R étant des radicaux méthyle, les radicaux R', identiques ou différents sont un chaînon alkylène divalent hydrocarboné linéaire ou ramifié comportant de 1 à 18 atomes de carbone, de préférence 2 à 6, de préférence une chaîne triméthylène - $(CH_2)_3$ - et méthyl-2 triméthylene $-CH_2-\underset{CH_3}{CH}-CH_2-$, p est un nombre entier compris entre 1 et 30 inclus, de préférence entre 2 et 20 inclus, q est un nombre entier compris entre 1 et 100 inclus, de préférence entre 2 et 30 inclus.

Le copolymère selon l'invention peut être un copolymère alterné ou statistique.

Comme exemple de radical R', on peut citer les radicaux méthylène, éthylène, triméthylène, méthyltriméthylène, éthyléthylène, etc .....

La plupart des produits de formule (1) sont des produits bien connus dans l'industrie.

Pour préparer les produits de formule (1) on peut par exemple utiliser comme organopolysiloxane de départ le copolymère de formule (2) :

(2) 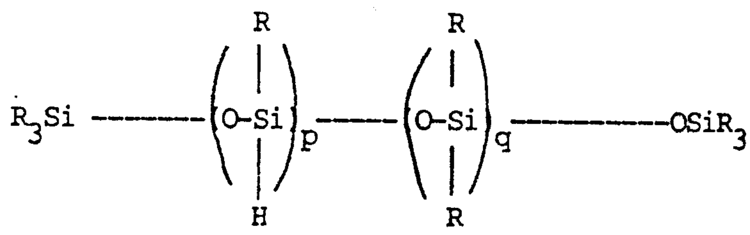

dans laquelle R, p et q ont la signification donnée ci-dessus.

Ces produits sont bien connus dans l'industrie des silicones et sont généralement disponibles dans le commerce. Ils sont par exemple décrits dans les brevets US-A-3 220 942, 3 341 111 et 3 436 366.

Sur les produits de formule (2) on fait réagir un alcool à insaturation alcénique de formule (3) : R"OH, dans laquelle R" est un radical alcénylène linéaire ou ramifié ayant de 2 à 18 atomes de carbone. Parmi ces alcools on utilise plus particulièrement l'alcool allylique et l'alcool méthallylique.

On peut utiliser comme catalyseur d'hydrosilylation pour faire réagir les alcools insaturés de formule (3) sur

l'hydrogénopolysiloxane de formule (2) des catalyseurs d'hydrosilylation connus notamment les complexes du Platine décrits dans les brevets US-A-3 715 334, 3 775 452 et 3 814 730 ; les complexes platine oléfine décrits dans les brevets US-A-3 159 601 et 3 159 662.

Des procédés de préparation des produits de formule (1) sont décrits en détail dans les brevets US-A-2 970 150 et 4 160 775 cités comme référence.

Comme produit de formule (1) on préfère utiliser les produits dont la masse moléculaire en nombre est comprise entre 600 et 10 000.

Les additifs silicone selon l'invention sont d'excellents débullants pour plastisol et de remarquables lubrifiants du PVC, pouvant par exemple remplacer tout ou partie des lubrifiants utilisés jusque là pour le PVC rigide et plastifié. L'additif silicone selon l'invention présente, entre autres, l'avantage surprenant pour ce type de produit de ne pas détériorer la soudabilité du PVC en particulier du PVC plastifié et de plus d'améliorer la stabilité thermique à long terme du PVC dans la machine de transformation.

L'utilisation des additifs silicones selon l'invention sont par ailleurs particulièrement conseillés dans le PVC utilisé pour fabriquer des disques audio d'enregistrement. Ces additifs assurent dans ce cas un meilleur moulage et démoulage et procure une réduction du frottement du saphir donnant d'une part une meilleure reproduction du son et une longévité plus grande du disque.

Les additifs silicone selon l'invention peuvent être introduits dans le PVC en masse ou en solution dans un solvant organique compatible avec la silicone et le PVC. Si le PVC contient du plastifiant, il est avantageux de disperser auparavant l'additif dans le plastifiant.

D'autres caractéristiques et avantages de la présente invention apparaîtront à la lecture des exemples suivants donnés à titre illustratif nullement limitatif.

- EXEMPLE 1:

Préparation d'une huile polydiméthylsiloxane à motifs gammahydroxypropyle dans la chaîne :

Dans un ballon tricol de 1 litre on charge 500 g d'une huile polydiméthylpolyhydrogénométhylsiloxane bloquée à chacune des deux extrémités de la chaîne par un motif triméthylsilyle. Cette huile porte en moyenne 2,2 motifs hydrogénométhylsiloxane par molécule dans la chaîne. La masse moléculaire en nombre Mn du polysiloxane est de 2 125, sa masse moléculaire pondérale Mw est de 3 970, son indice de polydispersité Ip est de 1,9 et sa viscosité V à 25 °C est de 25 mPa.s. On porte la charge à une température de 120 °C.

On introduit un mélange d'alcool allylique et de catalyseur au platine Pt°. Ce dernier est un complexe de Pt° et de tétravinyltétraméthylcyclotétrasiloxane préparé conformément à l'enseignement des brevets US-A-3 715 334, 3 775 452 et 3 814 730 utilisé à raison de 8 mg de Pt° métal par kg de polysiloxane. L'alcool allylique est ajouté en quantité telle qu'il présente un excès molaire de 50 % de groupes OH par rapport aux groupes SiH de l'huile suivant le mode opératoire ci-après :

On charge une ampoule de coulée avec 80 % ce l'alcool à introduire et renfermant la totalité du catalyseur, 20 % de ce mélange est coulé puis on rajoute le restant d'alcool, le mélange réactionnel étant maintenu au reflux. L'addition s'effectue en 4 heures.

Les SiH résiduaires sont dosés en fin d'addition de l'alcool et la réaction est poursuivie jusqu'à disparition totale des SiH dans la masse réactionnelle (durée 3 heures). L'excès d'alcool est éliminé en maintenant le chauffage pendant 30 minutes sous pression réduite (1,33 k.Pa).

L'huile ainsi obtenue est colorée et trouble, après traitement au noir et filtration sur terres de diatomée Clarcel® on obtient une huile incolore et limpide avec un rendement en hydroxyles pratiquement quantitatif.

Caractéristiques de l'huile polydiméthylsiloxane hydroxypropylée (PDMS) obtenue :

% en poids OH théorique calculé : 1,63 %, dosé : 1,63 - 1,67 %, Mn = 2 210, Mw = 5 050, Ip = 2,1, V 25 °C = 67 mPa.s, 2,2 fonctions hydroxypropyle par mole.

- EXEMPLE 2 :

On répète le mode opératoire de l'exemple 1 sauf que l'on charge dans le réacteur une huile polyhydrogénométhylsiloxane ayant les caractéristiques suivantes :

Mn = 1 325, Mw = 1 925, Ip = 1,45, V 25 °C = 12 mPa.s, elle porte en moyenne 2,5 motifs SiH/molécule dans la chaîne.

On obtient alors une huile polydiméthylsiloxane (PDMS) gammahydroxypropylée dans la chaîne ayant les caractéristiques suivantes :

Mn = 1 295, Mw = 2 095, Ip = 1,6, V 25 °C = 66 mPa.s., 2,4 fonctions OH par mole.

- EXEMPLE 3 :

On répète le mode opératoire de l'exemple 1 sauf que l'on charge dans le réacteur une huile polyhydrogénométhylsiloxane ayant les caractéristiques suivantes :

Mn = 2 295, Mw = 4 000, Ip = 1,75, V 25 °C = 26 mPa.s, elle porte en moyenne 4,7 motifs SiH/molécule dans la chaîne.

On obtient alors une huile PDMS gammahydroxypropylée dans la chaîne ayant les caractéristiques suivantes :

% en poids OH théorique calculé 3,11 % ; dosé 3,13 % ; Mn = 2 260, Mw = 4 560, Ip = 2,0, V 25 °C = 267

mPa.s., 4,6 fonctions OH par molécule.

- EXEMPLES 4 A 13 :

On répète le mode opératoire de l'exemple 1 sauf que l'on utilise diverses huiles polyhydrogénométhylpolydiméthylsiloxane de formule (2). Les caractéristiques des huiles de formule (2) et des huiles de formule (1) obtenues sont rassemblées dans le tableau 1 ci-après.

TABLEAU 1

| Exemple | Caract. huile de formule(2) | | | | | Caract. huile de formule (1) | |
|---|---|---|---|---|---|---|---|
| | Mn | p** | q** | SiH % | OH % | Viscosité mPa.s. | Mn calculée |
| 4 | 1 250 | 4,5 | 10,9 | 10,4 | 5 | 400 | 1 500 |
| 5 | 2 000 | 8 | 18,3 | 11,6 | 5,5 | 2 à 3 000 | 2 450 |
| 6 | 1 250 | 9 | 7,3 | 20,8 | 8 | 8 000 | 1 750 |
| 7 | 2 000 | 12 | 15,1 | 17,4 | 7,3 | 10 à 20 000 | 2 700 |
| 8 | 1 250 | 15 | 2,5 | 34,8 | 11 | ≃200 000 | 2 100 |
| 9 | 2 000 | ≃12 | ≃ 15 | 17,4 | ≃7,5 | 12 000 | ≃2 700 |
| 10 | 1 250 | ≃12 | ≃ 5 | 27,8 | ≃ 10 | 34 000 | ≃ 1 950 |
| 11 | 4 000 | ≃12 | ≃ 42 | 8,7 | 4,2 | 2 500 | ≃ 4 700 |
| 12 | 1 250 | 2,4 | 12,6 | 5,5 | 2,9 | 60 | 1 400 |
| 13 | 2 000 | 4 | 21,6 | 5,8 | 2,9 | 300 | 2 250 |

** nombre de motifs selon la formule (2).

- EXEMPLE 14 :

Débullage du PVC plastisol :

On prépare un plastisol constitué par le mélange suivant :
- PVC microsuspension PB 1 702® commercialisé par la Société ATOCHEM 100 parties
- Dioctylphtalate (DOP) 35 parties
- Stabilisant 2 parties

La composition du stabilisant est la suivante :
(pcr = partie pour cent parties de résine)
- Additif Ba/Zn BZ 505® commercialisé par CIBA-GEIGY 1,60 pcr
- Trilaurylphosphite OS 360® commercialisé par la Société Française d'Organosynthèse 0,20 prc
- Rhodiastab 82® (bétadicétone) commercialisé par la Société RHONE-POULENC 0,15 pcr
- Octoate de Zinc à 22 % de Zinc commercialisé par la Société ROUSSELOT 0,05 pcr

L'additif silicone est, préalablement à l'essai, dilué dans le DOP.

L'ensemble des additifs est prémélangé à l'aide d'une spatule dans une capsule en porcelaine.

On laisse la viscosité diminuer jusqu'à ce qu'on puisse couler le mélange dans un ballon (après 30 minutes environ) dans lequel le plastisol est homogénéisé sous agitation entre (60 tours/minute environ) et sous vide (trompe à eau).

Le "débullage" se manifeste par la formation d'une mousse qui envahit le ballon ; dès cette étape de préparation, on peut juger de l'efficacité de l'agent débullant par l'importance de cette mousse ; la rapidité de formation et la hauteur de mousse sont les critères classiquement retenus.

Le vide est cassé plusieurs fois et le maintien sous vide est prolongé industriellement pendant 10 minutes.

Le plastisol est ensuite étalé à l'aide d'un tire-film sur une plaque de verre dégraissée. L'épaisseur retenue est 1 mm (épaisseur suffisant pour évaluer après cuisson les colorations, la transparence et pour observer la présence éventuelle des microbulles).

La plaque de verre revêtue du film est introduite dans un four ventilé chauffé à 200 °C pendant 4 minutes, ce qui est suiffisant pour que le film soit bien gélifié.

Après refroidissement, les films détachés de leur support en verre sont examinés :
- soit à la loupe binoculaire (grossissement X 30) et classés par ordre d'efficacité de débullage croissant (notes de 0 à 10),
- soit au microscope optique (grossissement 100) en comptant le nombre de bulles de diamètre > 25 μm par $mm^2$.

Pour montrer l'efficacité des huiles hydroxypropylées, on fait varier :
- les concentrations,
- les temps de débullage.

On a chiffré l'effet "débullant' en comptant les bulles de diamètre supérieur ou égal à 25 μm.

L'ensemble des observations est résumé dans le tableau 2 ci-après.

TABLEAU 2

| | Additif silicone de l'exemple | Teneur en additif silicone (pcr) | Loupe binoculaire (note) | Microscope nombre de bulles au bout de 10 mn ($mm^2$) |
|---|---|---|---|---|
| mélange stabilisant (2 pcr) | 6 | 0,15 | 7 | 0 |
| | 7 | 0,02 | 8 | 0 |
| | 7 | 0,05 | 9 | 0 |
| | 8 | 0,02 | 10 | 0 |
| | 8 | 0,04 | 10 | 0 |
| | 9 | 0,02 | 10 | 0 |
| | 10 | 0,02 | 10 | 0 |
| | Témoin (sans additif) | - | 0 | 30 |

- EXEMPLE 15 :

Extrusion soufflage de bouteille :

On utilise une machine d'extrusion soufflage de marque SIDEL DSL3® (diamètre 90 mm - Manège à 6 moules de bouteilles type "eau minérale" d'un volume de 1,5 litre), débit : 160 kg/h (soit 3 000 bouteilles/h), ampérage en régime environ 55A, profil de température 170 - 175 - 180 - 185 - 190 °C.

La composition de référence utilisée à titre de comparaison est la suivante :

- PVC type suspension Kwert 57® 100 parties
- Renforçant au choc (MBS) 8 parties
- "Processing aid" (copolymère de type acrylique) 0,3 partie
- Stéarate de calcium 0,23 partie
- Octoate de zinc 0,09 partie
- Stéaroylbenzoylméthane 0,25 partie
- Huile de soja époxydée 5 parties

- Lubrifiant interne (mono-stéarate de glycérol) 1,4 partie
- Lubrifiant mixtes (esters à longue chaîne) 0,6 partie
- Lubrifiant externe (paraffines ou paraffines oxydées) 0,15 partie

Avec une formule de ce type on obtient des bouteilles de 42 g environ et la fabrication peut être prolongée sans interruption pendant au moins 120 heures sans apparition notable de traces de carbonisation correspondant aux accrochages sur outils, mais apparition de traces de dépôts de lubrifiants visibles dans les moules.

Le rôle de lubrifiant externe est joué par des cires de polyéthylène oxydées ou non, lubrifiant soit par elles-mêmes (cire de polyéthylène), soit par réaction avec les carboxylates métalliques utilisés, comme stabilisant thermique et libérant un acide gras par transsalification et transestérification entraînant des dépôts. Ces dépôts sont supprimés par l'utilisation d'additif silicone selon l'invention qui constitue un compromis permettant une lubrification juste suffisante pour ne pas "coller" et se décomposer dans des délais économiquement raisonnables (au moins une semaine).

Composition selon l'invention : la cire de polyéthylène est remplacée dans la composition de référence précédente par 0,05 partie d'huile obtenue à l'exemple 12.

On a pu souffler des bouteilles, sur la même machine, dans les mêmes conditions de débit, des bouteilles de poids identique, de même résistance à la chute (0 % de casse à 1 mètre 20 de hauteur).

L'aspect de surface est amélioré ainsi que la clarté.

Aucun dépôt n'est perceptible après un essai de longue durée (360 heures).

L'essai en plastographe Brabender® permet d'observer :

- une légère amélioration des colorations,
- une légère baisse du couple résistant,
- une augmentation sensible de la stabilité à long terme (temps pour atteindre la carbonisation).

Les résultats de la comparaison du comportement des compositions de référence et selon l'invention sont rassemblés dans le tableau 3 ci-après.

TABLEAU 3

| Extrusion bouteille | Cire de polyéthylène oxydée | Additif Polysiloxane |
|---|---|---|
| Poids | 42 g ± 1 g | 42 g ± 1 g |
| résistance à la chute | 0 % de casse à 1,50 m de chute | 0 % de casse à 1,50 m de chute |
| aspect | transparent à la limite du "louche" | parfaitement transparent |
| collage longue durée | limite | absence |
| dépôt sur outil | limite | absence |
| Essai plastographe | | |
| coloration initiale (échelle Lovibond) | 3 | 2 |
| stabilité coloration | 10 mn | 15 mn |
| stabilité thermique à long terme | 60 mn | 70 mn |
| couple en palier | 1 250 g/m | 1 150 g/m |

- EXEMPLE 16 :

Calandrage de pellicule en PVC rigide :

On utilise comme appareillage une calandre type Schwabentann® à cinq cylindres en L renversés (diamètre des premiers cylindres 15 cm, largeur 50 cm).

Température des cylindres : 175 - 180 - 185 - 190 - 195 °C.

Les rapports de friction sont successivement : 12 %, 11 %, 6,3 %.

Epaisseur de la pellicule : 150 m.

Le mélange est prégélifié pendant deux minutes à 160 °C en malaxeur interne type Farrel® puis mis en feuille pendant 6 minutes à 170 °C sur malaxeur à cylindre Lescuyer® avant d'être déposé sur les cylindres supérieurs de la calandre.

La composition PVC de référence utilisée à titre de comparaison est la suivante :

- PVC type suspension Kwert 57® 100 parties
- Renforçant au choc (MBS) 3 parties
- Stéarate de calcium 0,2 partie
- Stéarate de zinc 0,2 partie
- Huile de soja époxydée 3 parties
- Stéaroylbenzoylméthane 0,3 partie
- Alcool éthylique 1,5 partie
- Ester à longue chaîne 0,3 partie
- Lubrifiant externe (acide stéarique) 0,2 partie

La mise en oeuvre de cette composition de référence fait apparaître des grains de PVC non fondus, du "collage" ainsi que du "plate out".

Si dans la formulation de référence ci-dessus on remplace l'ester à longue chaîne et le lubrifiant externe par l'huile de l'exemple 12 (0,2 partie). On obtient :

- un "bourrelet" entre les 2ème et 3ème cylindres mince et régulier, garant d'absence de défauts (Chevrons),
- une absence de collage même après recyclage de chutes,
- un bon état de gélification de la pellicule (absence de grains non fondus) malgré la bonne lubrification externe,
- l'absence de "plate out", c'est-à-dire de dépôt sur outil provoquant des tâches espacées régulièrement sur la pellicule.

- EXEMPLE 17 :

Calandrage de film plastifié :

L'appareillage utilisé est identique à celui de l'exemple 16 utilisé pour la pellicule en PVC rigide. Le profil de température est : 160 - 175 - 180 - 185 - 180 °C.

On utilise les mêmes rapports de friction qu'à l'exemple 16.

L'épaisseur de la pellicule est de 200 µm.

La composition PVC de référence utilisé à titre de comparaison est la suivante :

- PVC Kwert 71® 100 parties
- Plastifiant (DOP) 50 parties
- Stabilisant à base de Baryum/Cadmium 2 parties
- Antioxydant phénolique 0,1 partie
- Lubrifiant (acide stéarique) 0,2 partie

Le calandrage de cette composition, par la présence d'acide stéarique employé comme lubrifiant externe, génère du "plate out" et des tâches sur la pellicule.

L'emploi d'huile polysiloxane hydroxypropylée de l'exemple 12 a la même teneur et à la place de l'acide stéarique dans la composition de référence permet d'obtenir un calandrage sans collage de la pellicule sur les rouleaux en évitant le "plate out" et les tâches.

**Revendications**

1. - Composition de polychlorure de vinyle, caractérisée en ce qu'elle comporte, pour 100 parties de résine PVC, de 0,001 à 2 parties, de préférence de 0,005 à 1 partie d'au moins un polyorganosiloxane séquencé ou statistique de formule moyenne (1) :

(1) 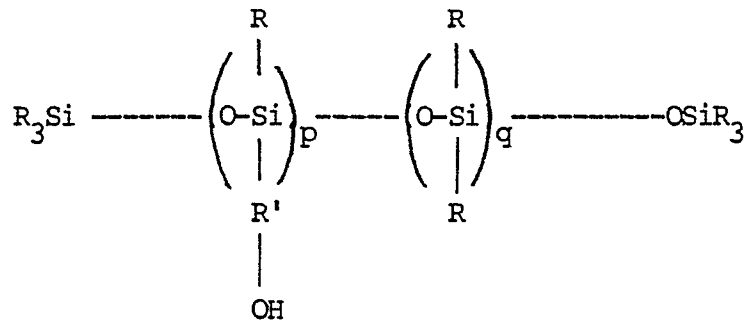

dans laquelle les radicaux R identiques ou différents sont choisis parmi les radicaux méthyle et phényle, 60 % molaire au moins de radicaux R étant des radicaux méthyle, les radicaux R', identiques ou différents, sont un chaînon alkylène divalent hydrocarboné linéaire ou ramifié comportant de 1 à 18 atomes de carbone, p est un nombre entier compris entre 1 et 30, q est un nombre entier compris entre 1 et 100.

2. - Composition selon la revendication 1, caractérisée en ce que le polyorganosiloxane de formule (1) a une masse moléculaire en nombre comprise entre 600 et 10 000.

3. - Composition selon l'une quelconque des revendications précédentes, caractérisée en ce que R' est le radical triméthylène et méthyl-2 triméthylène.

4. - Composition selon l'une quelconque des revendications précédentes, caractérisée en ce que le radical R est le radical méthyle.

5. - Composition selon l'une quelconque des revendications précédentes, caractérisée en ce que p est compris entre 2 et 20 et q est compris entre 2 et 30.

6. - Composition telle que définie à l'une quelconque des revendications 1 à 5, sous la forme d'une composition de PVC plastisol.

7. - Composition telle que définie à l'une quelconque des revendications 1 à 5, sous la forme d'une composition de PVC rigide.

8. - Composition telle que définie à l'une quelconque des revendications 1 à 5, sous la forme d'une composition de PVC plastifiée.

9. - Additif silicone pour PVC plastisol, PVC rigide, PVC plastifié en vue d'assurer le débullage et/ou la lubrification, caractérisé à ce qu'il répond à la définition donnée à l'une quelconque des revendications 1 à 5.

Office européen des brevets

# RAPPORT DE RECHERCHE EUROPEENNE

Numéro de la demande

EP 86 42 0262

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CHEMICAL ABSTRACTS, vol. 100, no. 16, 16 avril 1984, page 43, résumé no. 122222c, Columbus, Ohio, US; JP-A-58 180 555 (TORAY SILICONE C., LTD.) 22-10-1983 | 1-9 | C 08 L 27/06 //<br>(C 08 L 27/06<br>C 08 L 83:06 ) |
| A | EP-A-0 043 965 (HOECHST A.G.)<br>* Revendication 1; page 7, ligne 1 - page 8, ligne 5 * | 1-9 | |
| A | US-A-4 231 909 (F.FEARON et al.)<br>* Revendications * | 1-9 | |

DOMAINES TECHNIQUES RECHERCHES (Int. Cl.4)

C 08 L
C 08 K

Le présent rapport de recherche a été établi pour toutes les revendications

| Lieu de la recherche | Date d'achèvement de la recherche | Examinateur |
|---|---|---|
| LA HAYE | 30-01-1987 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503. 03.82